# EUROPEAN PATENT APPLICATION

(11) **EP 4 098 394 A1**
(43) Date of publication of application: **07.12.2022**
(21) Application number: 21781372.4
(22) Date of filing: 08.02.2021
(51) Int. Cl.: B23K 35/28, B23K 1/19, B23K 35/22, C22C 21/00

(54) **ALUMINUM ALLOY BRAZING SHEET AND METHOD FOR BRAZING ALUMINUM ALLOY BRAZING SHEET**

(30) Priority: 31.03.2020 JP 2020064320
(71) Applicant: KABUSHIKI KAISHA KOBE SEIKO SHO (KOBE STEEL, LTD.), Hyogo 651-8585 (JP)
(72) Inventor: AZUMA, Yuto, Moka-shi, Tochigi 321-4367 (JP); SHIBUYA, Yuji, Moka-shi, Tochigi 321-4367 (JP); TSURUNO, Akihiro, Moka-shi, Tochigi 321-4367 (JP); YAMADA, Shogo, Kariya-shi, Aichi, 448-8661 (JP); UTSUNOMIYA, Masashi, Kariya-shi, Aichi, 448-8661 (JP); SAJI, Atsushi, Kariya-shi, Aichi, 448-8661 (JP)
(74) Representative: Müller-Boré & Partner Patentanwälte PartG mbB
(86) International application number: PCT/JP2021/004683
(87) International publication number: WO 2021/199685

(57) **Abstract**

Provided is an aluminum alloy brazing sheet which has excellent molten wax flow suppression and gap filling properties, and a method for brazing the aluminum alloy brazing sheet. The aluminum alloy brazing sheet (1) comprises a core material (2) and a brazing material (3) provided on at least one surface of the core material (2). The brazing material (3) includes 5.0-9.0 mass% Si, 0.10-0.90 mass% Mg, and 0.05-0.60 mass% Bi, further includes at least one of 0.80 mass% or less Mn and 0.60 mass% or less Ti, and the remainder is made up of Al and inevitable impurities. If the content of Mn is taken as [Mn] mass% and the content of Ti is taken as [Ti] mass%, the equation 0.55×[Mn]+0.31×[Ti]≥0.055 is satisfied.

## Description

### TECHNICAL FIELD

The present invention relates to an aluminum alloy brazing sheet and a brazing method therefor, and more particularly to an aluminum alloy brazing sheet for application to brazing methods in which no flux is used, i.e., the so-called flux-less brazing (or flux-free brazing), and a brazing method therefor.

### BACKGROUND ART

Among methods for brazing aluminum-alloy members for, for example, a heat exchanger, there is a method called vacuum brazing, in which the members are brazed in a vacuum without using a flux.

Compared to flux brazing in which a flux is used, the vacuum brazing has various merits including no need of applying a flux and freedom from problems caused by improper flux application amounts.

However, since vacuum brazing necessitates an expensive vacuum furnace for heating while keeping the inside of the furnace vacuum during brazing, an operation cost is increased. In addition, it is difficult to control the inside of the evacuated furnace and thus the operation becomes more difficult.

In order to overcome such problems, investigations have been made on flux-less brazing in which brazing is performed in a non-vacuum atmosphere without using a flux, and the following technique has been proposed.

Specifically, Patent Literature 1 discloses a flux-less brazing method for an aluminum material in which an aluminum-clad material including an Al-Si brazing filler material containing from 0.1 to 5.0 mass% of Mg and from 3 to 13 mass% of Si is an outermost surface layer is used. In this method, in a non-oxidizing atmosphere involving no depressurization, a contact adhesion portion with a member to be brazed is bonded by the Al-Si brazing filler material at a heating temperature of from 559°C to 620°C.

### CITATION LIST

### PATENT LITERATURE

Patent Literature 1: JP-A-2010-247209

### SUMMARY OF INVENTION

### TECHNICAL PROBLEM

The technique according to Patent Literature 1 is a technique concerning flux-less brazing performed in a non-vacuum inert gas atmosphere, and a predetermined effect is exhibited in Patent Literature 1.

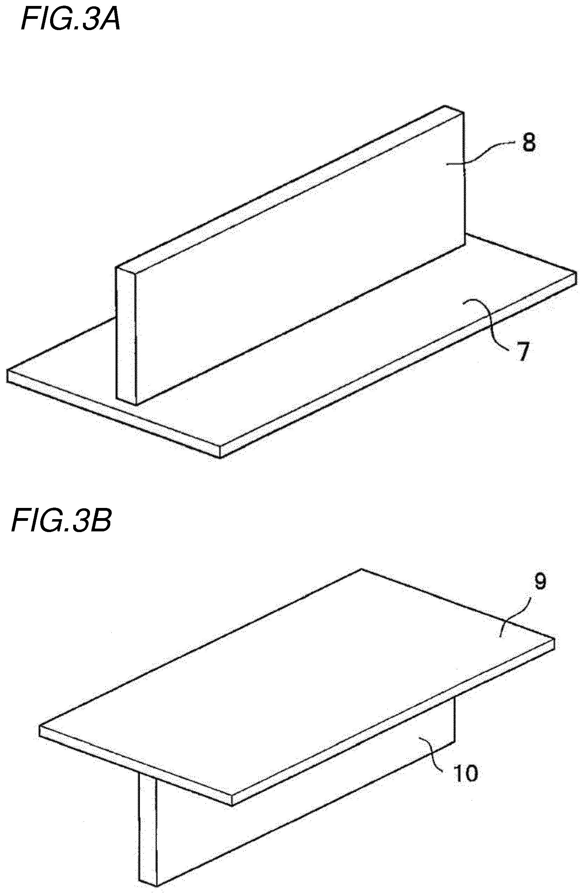

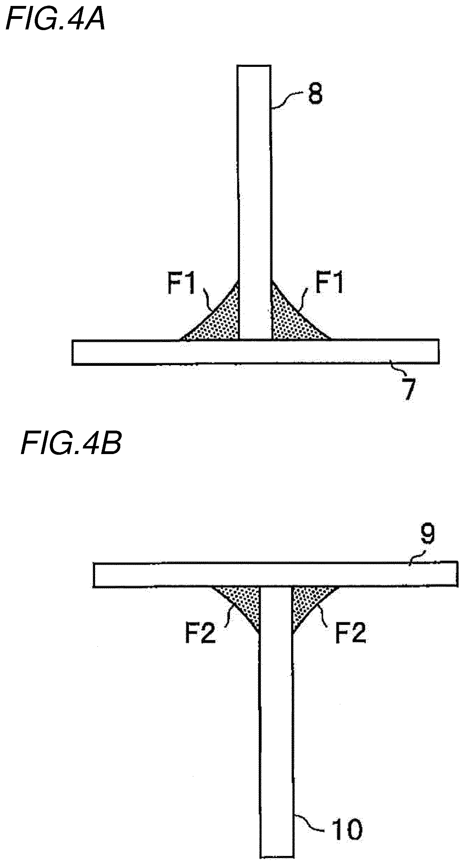

However, when such flux-less brazing is performed, it takes time to break an oxide film, and thus the flow of the molten brazing filler precedes the formation of the fillets. Therefore, when brazing is performed in a state in which the molten brazing filler as shown in FIG. 3B and FIG. 4B is easily affected by gravity, an amount of the molten brazing filler flowing in a vertical direction increases, a fillet size of a portion to be joined, which is located on the upper side, decreases, and erosion may occur due to the molten brazing filler.

Consequently, in the aluminum alloy brazing sheet for application to flux-less brazing, it is necessary to inhibit the flowability of the molten brazing filler.

Meanwhile, in a product to which the aluminum alloy brazing sheet is applied, there are many heat exchangers having a gap at a portion to be joined, such as a radiator and a condenser, and therefore, it is necessary to secure a certain level of gap-filling properties.

Accordingly, an object of the present invention is to provide an aluminum alloy brazing sheet and a brazing method for an aluminum alloy brazing sheet, which have excellent flow-inhibiting of molten brazing filler and excellent gap-filling properties.

An aluminum alloy brazing sheet relating to the present invention contains a core material and a brazing filler material provided on at least one surface of the core material, in which
the brazing filler material contains
   Si: 5.0 mass% or more and 9.0 mass% or less,
   Mg: 0.10 mass% or more and 0.90 mass% or less, and
   Bi: 0.05 mass% or more and 0.60 mass% or less, and
   further contains at least one of
   Mn: 0.80 mass% or less and
   Ti: 0.60 mass% or less,
   with the remainder being Al and unavoidable impurities, and
   0.55 × [Mn] + 0.31 × [Ti] ≥ 0.055 is satisfied, wherein
the Mn content is defined as [Mn] mass% and the Ti content is defined as [Ti] mass%.

A brazing method relating to the present invention using an aluminum alloy brazing sheet including a core material and a brazing filler material provided on at least one surface of the core material, in which
the brazing filler material contains
   Si: 5.0 mass% or more and 9.0 mass% or less,
   Mg: 0.10 mass% or more and 0.90 mass% or less, and
   Bi: 0.05 mass% or more and 0.60 mass% or less, and
   further contains at least one of
   Mn: 0.80 mass% or less and
   Ti: 0.60 mass% or less,
   with the remainder being Al and unavoidable impurities, and
   0.55 × [Mn] + 0.31 × [Ti] ≥ 0.055 is satisfied, wherein
the Mn content is defined as [Mn] mass% and the Ti content is defined as [Ti] mass%, and wherein
the brazing method comprises brazing the aluminum alloy brazing sheet at a heating temperature of 560°C or more and 620°C or less without a flux.

### SOLUTION TO PROBLEM

### ADVANTAGEOUS EFFECTS OF INVENTION

An aluminum alloy brazing sheet according to the present invention is excellent in flow-inhibiting of molten brazing filler and in gap-filling properties.

A brazing method for an aluminum alloy brazing sheet according to the present invention is excellent in flow-inhibiting of molten brazing filler and in gap-filling properties.

### BRIEF DESCRIPTION OF DRAWINGS

[FIG. 1] FIG. 1 is a cross-sectional view of an aluminum alloy brazing sheet in the present embodiment.
[FIG. 2A] FIG. 2A is a perspective view for illustrating a test method for evaluating brazing properties, in which a lower material and an upper material have been combined.
[FIG. 2B] FIG. 2B is a side view for illustrating the test method for evaluating brazing properties, in which the lower material and the upper material have been combined.
[FIG. 3A] FIG. 3A is a perspective view for illustrating a test method for evaluating the flowability of the molten brazing filler, in which a portion to be joined is located on a lower side and a fillet is formed on the lower side.
[FIG. 3B] FIG. 3B is a perspective view for illustrating the test method for evaluating the flowability of the molten brazing filler, in which a portion to be joined is located on an upper side and a fillet is formed on the upper side.
[FIG. 4A] FIG. 4A is a cross-sectional view for illustrating the test method for evaluating the flowability of the molten brazing filler, in which the portion to be joined is located on the lower side and the fillet is formed on the lower side.
[FIG. 4B] FIG. 4B is a cross-sectional view for illustrating the test method for evaluating the flowability of the molten brazing filler, in which the portion to be joined is located on the upper side and the fillet is formed on the upper side.
[FIG. 5A] FIG. 5A is a graph illustrating relationships between the Mn content of the brazing filler material and a top-bottom difference (index of the flowability of the molten brazing filler).
[FIG. 5B] FIG. 5B is a graph illustrating relationships between the Ti content of the brazing filler material and the top-bottom difference (index of the flowability of the molten brazing filler).

### DESCRIPTION OF EMBODIMENTS

Modes (embodiments) for providing the aluminum alloy brazing sheet in the present invention are described below by referring to the drawings appropriately.

### [Aluminum Alloy Brazing Sheet]

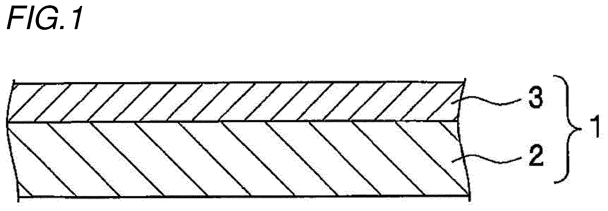

An aluminum alloy brazing sheet (hereinafter may be referred to as "brazing sheet") in the present embodiment has a configuration which, for example, includes a core material 2 and a brazing filler material 3 disposed on one surface of the core material 2, as shown in FIG. 1.

In the brazing sheet 1 in the present embodiment, the content of components in the brazing filler material 3 is suitably specified.

Reasons for limiting the content of components in the brazing filler material of the brazing sheet in the present embodiment to specific ranges are described below in detail.

### [Brazing Filler Material]

The brazing filler material of the brazing sheet in the present embodiment contains 5.0 mass% or more and 9.0 mass% or less of Si, 0.10 mass% or more and 0.90 mass% or less of Mg, and 0.05 mass% or more and 0.60 mass% or less of Bi, and further contains at least one of 0.80 mass% or less of Mn and 0.60 mass% or less of Ti, with the remainder being Al and unavoidable impurities. 0.55 × [Mn] + 0.31 × [Ti] ≥ 0.055 is satisfied, where the content of Mn is defined as [Mn] mass% and the content of Ti is defined as [Ti] mass%.

The brazing filler material of the brazing sheet in the present embodiment may contain Zn, or may contain one or more of Fe, Cr, Zr, and V.

### (Si in brazing filler material: 5.0 mass% or more and 9.0 mass% or less)

Si in the brazing filler material improves the proportion of liquid phase at the brazing heating temperature to exhibit an effect of securing an amount of the molten brazing filler sufficient for forming a fillet. When the content of Si is less than 5.0 mass%, the amount of the molten brazing filler cannot be secured, the flowability of the molten brazing filler is excessively decreased, resulting in a decrease in brazing properties (gap-filling properties). Meanwhile, when the content of Si exceeds 9.0 mass%, the flowability of the molten brazing filler becomes too high, and erosion due to the molten brazing filler may occur.

Therefore, the content of Si in the brazing filler material is 5.0 mass% or more and 9.0 mass% or less.

From the standpoint of more reliably obtaining the effect based on Si, the content of Si is preferably 6.0 mass% or more, more preferably 6.2 mass% or more, and still more preferably 6.5 mass% or more. From the standpoint of inhibiting an increase in the flowability of the molten brazing filler, the content of Si is preferably 8.0 mass% or less.

### (Mg in brazing filler material: 0.10 mass% or more and 0.90 mass% or less)

Mg in the brazing filler material vaporizes into the atmosphere at the brazing-filler melting temperature during brazing heating, and reacts with oxygen in the atmosphere. As a result, an oxide film formed in the surface of the brazing filler material is advantageously destroyed when Mg vaporizes and the oxygen concentration of the atmosphere is lowered to inhibit the molten brazing filler from being oxidized again (getter function), thereby improving the brazing properties. When the content of Mg is less than 0.10 mass%, the getter function might be insufficient, resulting in a decrease in brazing property. Meanwhile, when the content of Mg exceeds 0.90 mass%, the formation and growth of an MgO oxide film are promoted at the time of raising the brazing temperature, resulting in a decrease in brazing property.

Therefore, the content of Mg in the brazing filler material is 0.10 mass% or more and 0.90 mass% or less.

From the standpoint of more reliably obtaining the effect based on Mg, the content of Mg is preferably 0.30 mass% or more. From the standpoint of inhibiting the growth of the MgO oxide film, the content of Mg is preferably 0.80 mass% or less.

### (Bi in brazing filler material: 0.05 mass% or more and 0.60 mass% or less)

Bi in the brazing filler material reacts with Mg to yield Mg-Bi compounds which hardly dissolve at a temperature equal to or lower than the brazing-filler melting temperature. As a result, during temperature rising to a brazing-filler melting initiation temperature in heating for brazing, Mg is inhibited from diffusing to a surface-layer portion of the brazing filler material and the formation and growth of MgO in the surface of the brazing filler material (Mg-trapping function) are inhibited. At brazing-filler melting temperatures in heating for brazing, the Mg-Bi compounds dissolve in the matrix (brazing filler material) and, hence, vaporization of Mg is promoted. As a result, an oxide film formed in the surface of the brazing filler material is advantageously destroyed when Mg vaporizes and this Mg reacts with oxygen in the atmosphere. The oxygen concentration of the atmosphere decreases, the function inhibiting the molten brazing filler from being oxidized again (getter function) is improved, and the brazing properties are improved. When the content of Bi is less than 0.05 mass%, the brazing properties deteriorates. Meanwhile, when the content of Bi exceeds 0.60 mass%, the effect is saturated.

Therefore, the content of Bi in the brazing filler material is 0.05 mass% or more and 0.60 mass% or less.

From the standpoint of more reliably obtaining the effect based on Bi, the content of Bi is preferably 0.10 mass% or more. The content of Bi is preferably 0.50 mass% or less, and more preferably 0.40 mass% or less.

The present inventors have conducted studies on various compositions in order to achieve both of the "flow-inhibiting of the molten brazing filler" and the "gap-filling properties" of a brazing sheet at an excellent level, and as a result, have confirmed that Mn and Ti in the brazing filler material have a large influence on these performances.

Hereinafter, Mn and Ti in the brazing filler material are described.

### (Mn and Ti in brazing filler material: 0.55 × [Mn] + 0.31 × [Ti])

Mn and Ti in the brazing filler material improve the viscosity of the molten brazing filler, thereby inhibiting the flow of the molten brazing filler. In the case where a value calculated by 0.55 × [Mn] + 0.31 × [Ti] is less than 0.055, where the content of Mn is defined as [Mn] mass% and the content of Ti is defined as [Ti] mass%, the viscosity of the molten brazing filler is insufficient, and an amount of the molten brazing filler flowing in the vertical direction increases when brazing is performed in a state as shown in FIG. 3B and FIG. 4B.

Therefore, the value calculated by 0.55 × [Mn] + 0.31 × [Ti] is 0.055 or more (0.55 × [Mn] + 0.31 × [Ti] ≥ 0.055).

From the standpoint of more reliably obtaining the effect based on Mn and Ti, the value calculated by 0.55 × [Mn] + 0.31 × [Ti] is preferably 0.070 or more, more preferably 0.080 or more, and still more preferably 0.083 or more.

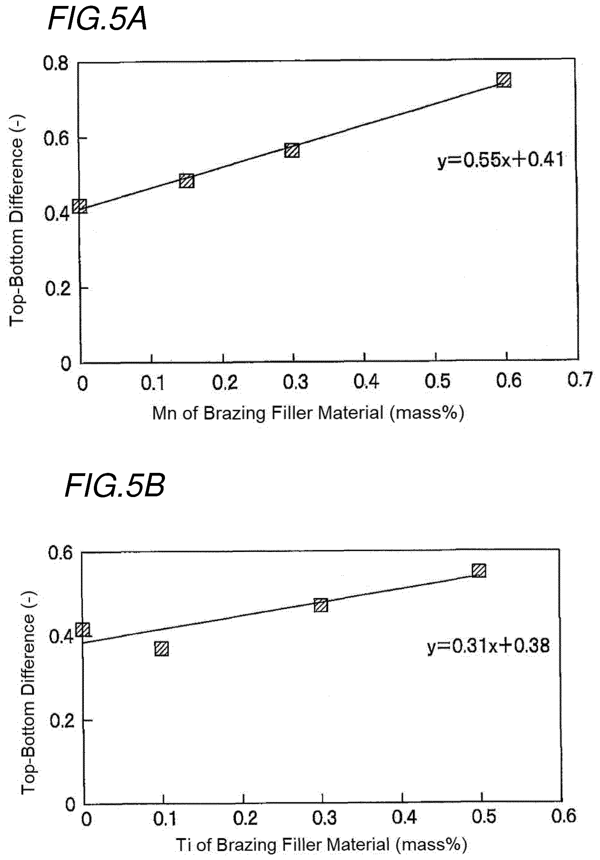

The formula "0.55 × [Mn] + 0.31 × [Ti]" was derived as follows.
the experimental results of specimens 9, 11, 12, and 24 were plotted on a graph with a horizontal axis "content of Mn in brazing filler material" and a vertical axis "top-bottom difference (index of the flowability of the molten brazing filler)", as shown in FIG. 5A, and an approximate straight line was drawn. A slope of the approximate straight line was calculated. Similarly, the experimental results of specimens 13, 14, 24, and 25 were plotted on a graph with a horizontal axis "content of Ti in brazing filler material" and a vertical axis "top-bottom difference (index of the flowability of the molten brazing filler)", as shown in FIG. 5B, and an approximate straight line was drawn. A slope of the approximate straight line was calculated. Since it can be understood that the calculated slope of the approximate straight line indicates the degree of influence of each element on the effect of flow-inhibiting of the molten brazing filler, the above formula was derived by multiplying the content of each element by the value of the slope of each approximate straight line as a coefficient.

### (Mn in brazing filler material: 0.80 mass% or less)

As described above, Mn in the brazing filler material improves the viscosity of the molten brazing filler, thereby inhibiting the flow of the molten brazing filler. However, when the content of Mn exceeds 0.80 mass%, Al-Mn(-Fe-Si) compounds having a large specific gravity are formed in the molten brazing filler, resulting in an increase in the amount of the molten brazing filler flowing in the vertical direction.

Therefore, the content of Mn in the brazing filler material is 0.80 mass% or less.

From the standpoint of more reliably obtaining the effect of flow-inhibiting of the molten brazing filler based on Mn, the content of Mn is preferably 0.10 mass% or more, and more preferably 0.20 mass% or more. From the standpoint of not reducing the effect of the flow-inhibiting of the molten brazing filler, the content of Mn is preferably 0.70 mass% or less, more preferably 0.65 mass% or less, and still more preferably 0.60 mass% or less.

### (Ti in brazing filler material: 0.60 mass% or less)

As described above, Ti in the brazing filler material improves the viscosity of the molten brazing filler, thereby inhibiting the flow of the molten brazing filler. However, when the content of Ti exceeds 0.60 mass%, Al-Ti compounds having a large specific gravity are formed in the molten brazing filler, resulting in an increase in the amount of the molten brazing filler flowing in the vertical direction.

Therefore, the content of Ti in the brazing filler material is 0.60 mass% or less.

From the standpoint of more reliably obtaining the effect of the flow-inhibiting of the molten brazing filler based on Ti, the content of Ti is preferably 0.15 mass% or more, and more preferably 0.20 mass% or more. From the standpoint of not reducing the effect of the flow-inhibiting of the molten brazing filler, the content of Ti is preferably 0.50 mass% or less.

As described above, since Mn and Ti in the brazing filler material play substantially the same role, the brazing filler material may contain at least one of Mn and Ti so as to have a content equal to or less than a given value, and may satisfy the above formula (0.55 × [Mn] + 0.31 × [Ti] ≥ 0.055).

### (Zn in brazing filler material: 5.0 mass% or less)

Zn in the brazing filler material can make the potential of the brazing filler material less noble. Zn thus forms a potential difference between the brazing filler material and the core material to thereby improve the corrosion resistance by sacrificial anticorrosive effect. However, in the case where the content of Zn exceeds 5.0 mass%, there is the possibility of causing early corrosion of fillets.

Consequently, in the case of incorporating Zn into the brazing filler material, the content of Zn in the brazing filler material is 5.0 mass% or less.

From the standpoint of more reliably obtaining the corrosion-resistance-improving effect by incorporating Zn, the content of Zn in the brazing filler material is preferably 0.5 mass% or more. From the standpoint of inhibiting the early corrosion of fillets, the content of Zn in the brazing filler material is preferably 4.0 mass% or less.

### (Fe in brazing filler material: 0.35 mass% or less)

Fe in the brazing filler material improves the corrosion resistance. Although the mechanism by which Fe improves the corrosion resistance has not been elucidated in detail, it is presumed that Al-Fe compounds are formed, and a Fe-deficient layer around the compounds becomes a portion having a less noble potential and preferentially undergoes corrosion. Hence, corrosion proceeds dispersedly, thereby improving the corrosion resistance. However, in the case where the content of Fe exceeds 0.35 mass%, coarse compounds are formed in the molten brazing filler, and the amount of the molten brazing filler flowing in the vertical direction increases when brazing is performed in the state as shown in FIG. 3B and FIG. 4B.

Therefore, in the case of incorporating Fe in the brazing filler material, the content of Fe in the brazing filler material is 0.35 mass% or less.

From the standpoint of more reliably obtaining the corrosion-resistance-improving effect by incorporating Fe, the content of Fe in the brazing filler material is preferably 0.05 mass% or more. From the standpoint of not reducing the effect of the flow-inhibiting of the molten brazing filler, the content of Fe in the brazing filler material is preferably 0.2 mass% or less.

### (Cr in brazing filler material: 0.3 mass% or less)

Cr in the brazing filler material improves the corrosion resistance. Although the mechanism by which the Cr improves the corrosion resistance has not been elucidated in detail, it is presumed that Al-Cr and Al-Cr-Si compounds are formed, and a Cr or Si deficient layer around the compounds becomes a portion having a less noble potential and preferentially undergoes corrosion. Hence, corrosion proceeds dispersedly, thereby improving the corrosion resistance. However, in the case where the content of Cr exceeds 0.3 mass%, coarse compounds are formed in the molten brazing filler, and the amount of the molten brazing filler flowing in the vertical direction increases when brazing is performed in the state as shown in FIG. 3B and FIG. 4B.

Therefore, in the case of incorporating Cr in the brazing filler material, the content of Cr in the brazing filler material is 0.3 mass% or less.

From the standpoint of more reliably obtaining the corrosion-resistance-improving effect by incorporating Cr, the content of Cr in the brazing filler material is preferably 0.05 mass% or more. From the standpoint of not reducing the effect of the flow-inhibiting of the molten brazing filler, the content of Cr in the brazing filler material is preferably 0.2 mass% or less.

### (Zr in brazing filler material: 0.3 mass% or less)

Zr in the brazing filler material improves the corrosion resistance. Although the mechanism by which Zr improves the corrosion resistance has not been elucidated in detail, it is presumed that Al-Zr compounds are formed, and a Zr deficient layer around the compounds becomes a portion having a less noble potential and preferentially undergoes corrosion. Hence, corrosion proceeds dispersedly, thereby improving the corrosion resistance. However, in the case where the content of Zr exceeds 0.3 mass%, coarse compounds are formed in the molten brazing filler, and the amount of the molten brazing filler flowing in the vertical direction increases when brazing is performed in the state as shown in FIG. 3B and FIG. 4B.

Therefore, in the case of incorporating Zr in the brazing filler material, the content of Zr in the brazing filler material is 0.3 mass% or less.

From the standpoint of more reliably obtaining the corrosion-resistance-improving effect by incorporating Zr, the content of Zr in the brazing filler material is preferably 0.05 mass% or more. From the standpoint of not reducing the effect of the flow-inhibiting of the molten brazing filler, the content of Zr in the brazing filler material is preferably 0.2 mass% or less.

### (V in brazing filler material: 0.3 mass% or less)

V in the brazing filler material improves the corrosion resistance. Although the mechanism by which V improves the corrosion resistance has not been elucidated in detail, it is presumed that Al-V compounds are formed, and a V deficient layer around the compounds becomes a portion having a less noble potential and preferentially undergoes corrosion. Hence, corrosion proceeds dispersedly, thereby improving the corrosion resistance. However, in the case where the content of V exceeds 0.3 mass%, coarse compounds are formed in the molten brazing filler, and the amount of the molten brazing filler flowing in the vertical direction increases when brazing is performed in the state as shown in FIG. 3B and FIG. 4B.

Therefore, in the case of incorporating V in the brazing filler material, the content of V in the brazing filler material is 0.3 mass% or less.

From the standpoint of more reliably obtaining the corrosion-resistance-improving effect by incorporating V, the content of V in the brazing filler material is preferably 0.05 mass% or more. From the standpoint of not reducing the effect of the flow-inhibiting of the molten brazing filler, the content of V in the brazing filler material is preferably 0.2 mass% or less.

As long as the content does not exceed the upper limit, one or more, that is, not only one, but also two or more of Fe, Cr, Zr, and V may be contained in the brazing filler material. This does not prevent the effect of the invention.

### (Remainder of brazing filler material: Al and unavoidable impurities)

The remainder of the brazing filler material is Al and unavoidable impurities. Examples of the unavoidable impurities in the brazing filler material include Ca, Be, Sr, Na, Sb, rare earth elements, and Li, and these elements may be contained so long as the effect of the invention is not prevented. Specifically, 0.05 mass% or less of Ca, 0.01 mass% or less of Be, and less than 0.01 mass% of another element may be contained.

So long as the contents of these elements do not exceed the given values, the inclusion of these elements does not prevent the effect of the invention and is acceptable, regardless of whether these elements are contained as unavoidable impurities or are added intentionally.

Zn, Fe, Cr, Zr, and V may also be contained as unavoidable impurities. In this case, the content of each element is, for example, 0.05 mass% or less individually and 0.15 mass% or less in total.

### [Core Material]

The core material of the brazing sheet in the present embodiment is made of, for example, an Al-Mn alloy containing 1.00 mass% or less (including 0 mass%) of Mg. The Al-Mn alloy is an aluminum alloy essentially containing Mn.

The core material of the brazing sheet in the present embodiment may contain Cu, Si, Fe, Ti, V, Ni, Cr, or Zr in addition to Mn and Mg.

### (Mn in core material: 2.5 mass% or less)

Mn in the core material improves the strength. However, in the case where the content of Mn exceeds 2.5 mass%, the amount of Al-Mn compounds may increase and there is a possibility of cracking during a step for material production.

Consequently, in the case of incorporating Mn into the core material, the content of Mn is 2.5 mass% or less.

From the standpoint of more reliably obtaining the strength-improving effect by incorporating Mn, the content of Mn in the core material is preferably 0.5 mass% or more.

### (Mg in core material: 1.00 mass% or less)

Mg in the core material improves the strength. Mg in the core material diffuses to the brazing filler material during temperature rising in heating for brazing and vaporizes to the atmosphere at brazing-filler melting temperatures to react with oxygen in the atmosphere.
As a result, an oxide film formed in the surface of the brazing filler material is advantageously destroyed when Mg vaporizes and the oxygen concentration of the atmosphere is lowered to inhibit the molten brazing filler from being oxidized again (getter function), thereby improving the brazing properties. Mg in the brazing filler material also performs a getter function. Because of this, in the case where the brazing filler material has a high content of Mg, the content of Mg in the core material may be low and may be 0 mass%.

Meanwhile, in the case where the content of Mg exceeds 1.00 mass%, Mg cannot be sufficiently trapped by Bi of the brazing filler material and the formation of MgO in the surface of the brazing filler material is promoted undesirably, resulting in a decrease in brazing property.

Consequently, the content of Mg in the core material is 1.00 mass% or less (including 0 mass%).

### (Cu in core material: 3.00 mass% or less)

Cu in the core material makes the potential of the core material noble, thereby improving the corrosion resistance. However, in the case where the content of Cu exceeds 3.00 mass%, the solidus temperature of the core material is reduced and this not only results in reducing erosion resistance but also results in reducing brazing-filler flowability and hence brazing property is deteriorated.

Consequently, in the case of incorporating Cu into the core material, the content of Cu is 3.00 mass% or less.

From the standpoint of more reliably obtaining the corrosion-resistance-improving effect by incorporating Cu, the content of Cu in the core material is preferably 0.05 mass% or more.

### (Si in core material: 1.2 mass% or less)

Si in the core material improves the strength. However, in the case where the content of Si exceeds 1.2 mass%, the solidus temperature of the core material is reduced and this not only results in reducing erosion resistance but also results in reducing brazing-filler flowability and hence brazing property is deteriorated.

Consequently, in the case of incorporating Si into the core material, the content of Si is 1.2 mass% or less.

From the standpoint of more reliably obtaining the strength-improving effect by incorporating Si, the content of Si in the core material is preferably 0.05 mass% or more.

### (Fe in core material: 0.5 mass% or less)

Fe in the core material improves the strength by solid-solution-hardening effect. However, in the case where the content of Fe exceeds 0.5 mass%, there is a possibility that coarse intermetallic compounds might be formed to reduce the formability.

Consequently, in the case of incorporating Fe into the core material, the content of Fe is 0.5 mass% or less.

From the standpoint of more reliably obtaining the strength-improving effect by incorporating Fe, the content of Fe in the core material is preferably 0.05 mass% or more.

### (Ti in core material: 0.3 mass% or less)

Ti in the core material improves the corrosion resistance. However, in the case where the content of Ti exceeds 0.3 mass%, there is a possibility that coarse intermetallic compounds might be formed to reduce the formability.

Consequently, in the case of incorporating Ti into the core material, the content of Ti is 0.3 mass% or less.

From the standpoint of more reliably obtaining the corrosion-resistance-improving effect by incorporating Ti, the content of Ti in the core material is preferably 0.01 mass% or more.

### (V, Ni, Cr, and Zr in core material: 0.3 mass% or less)

V, Ni, Cr, and Zr in the core material improve the strength by dispersing precipitates. However, in the case where each content of these elements exceeds 0.3 mass%, there is a possibility that coarse intermetallic compounds might be formed to reduce the formability.

Consequently, in the case of incorporating V, Ni, Cr, and Zr into the core material, the content of each of these elements is 0.3 mass% or less.

From the standpoint of more reliably obtaining the strength-improving effect by incorporating V, Ni, Cr, and Zr, the content of each element in the core material is preferably 0.05 mass% or more.

### (Remainder in core material: Al and unavoidable impurities)

The remainder of the core material is Al and unavoidable impurities. Examples of the unavoidable impurities of the core material include Ca, Na, Sr, and Li. Mn, Mg, Cu, Si, Fe, Ti, V, Ni, Cr, and Zr may also be contained as the unavoidable impurities. Specifically, Fe and Si, which are unavoidable impurities, may be contained in ranges of 0.03 mass% or less of Fe and 0.05 mass% or less of Si. Ca, Na, Sr, Li, Mn, Mg, Cu, Ti, V, Ni, Cr, and Zr, which are unavoidable impurities, may be 0.05 mass% or less individually, or 0.15 mass% or less in total.

So long as the contents of Ca, Na, Sr, and Li do not exceed the given values, the inclusion of these elements does not prevent the effect of the invention and is acceptable, regardless of whether these elements are contained as unavoidable impurities or are added intentionally.

### [Thickness of Aluminum Alloy Brazing Sheet]

The thickness of the brazing sheet in the present embodiment is not particularly limited. In the case of application to tube materials, the thickness of the brazing sheet is preferably 0.5 mm or less, more preferably 0.4 mm or less, and is preferably 0.05 mm or more.

In the case of application to side support materials, header materials, or tank materials, the thickness of the brazing sheet in the present embodiment is preferably 2.0 mm or less, more preferably 1.5 mm or less, and is preferably 0.5 mm or more.

In the case of application to fin materials, the thickness of the brazing sheet in the present embodiment is preferably 0.2 mm or less, more preferably 0.15 mm or less, and is preferably 0.01 mm or more.

From the standpoint of ensuring a proper brazing filler material thickness without impairing the basic properties including post-brazing strength, the thickness of the brazing sheet in the present embodiment is especially preferably 0.5 mm or more.

The thickness of the brazing material of the brazing sheet in the present embodiment is preferably 20 µm or more, and more preferably 30 µm or more, 40 µm or more, 50 µm or more, 60 µm or more, or 70 µm or more. By regulating the thickness of the brazing filler material to the given value or more, it is possible to secure a sufficient amount of the brazing filler material for forming the fillets, and it is possible to inhibit a decrease in the gap-filling properties.

The thickness of the brazing filler material of the brazing sheet is preferably 170 µm or less, and more preferably 150 µm or less. By regulating the thickness of the brazing filler material to the given value or less, it is possible to inhibit the molten brazing filler from easily flowing in the vertical direction when brazing is performed in the state as shown in FIG. 3B and FIG. 4B.

In a case where the brazing filler material is provided on both surfaces of the core material, the thickness of the brazing filler material refers to the thickness of the brazing filler material on one surface.

The cladding ratio of the brazing filler material in the brazing sheet in the present embodiment is not particularly limited regardless of which sheet or plate materials the brazing sheet is applied to. However, the cladding ratio of the brazing filler material is preferably 40% or less, more preferably 30% or less. By regulating the cladding ratio of the brazing filler material to the given value or less, the basic properties including post-brazing strength, the production efficiency, etc. can be prevented or inhibited from decreasing.

### [Other Configurations of Aluminum Alloy Brazing Sheet]

The brazing sheet in the present embodiment was described above using the two-layer configuration shown in FIG. 1 as an example. However, this does not exclude other configurations.

For example, the configuration of the brazing sheet in the present embodiment can be modified, in accordance with the desire of the user, by disposing a sacrificial material (sacrificial anticorrosive material) and an intermediate material on the other side of a core material 2 shown in FIG. 1 (i.e., on the side opposite to the side where the brazing filler material 3 has been disposed). A brazing filler material may be further disposed on the other side of the core material 2. Furthermore, after the sacrificial material and the intermediate material have been disposed on the other side of the core material 2, a brazing filler material may be further disposed on the outer side thereof.

In the case where the brazing sheet in the present embodiment has a configuration which includes a core material and two brazing filler materials disposed respectively on both sides of the core material, either of the brazing filler materials may be a brazing filler material which does not satisfy the requirements of the present invention (e.g., an Al-Si alloy, Al-Si-Zn alloy, or Al-Si-Mg alloy such as JIS 4045, 4047, or 4343) so long as the other brazing filler material satisfies the requirements of the present invention. In the case of using a brazing filler material which does not satisfy the requirements of the present invention, a flux may be applied to the surface of the brazing filler material before the brazing sheet is subjected to brazing.

The sacrificial material may be one which has a common composition and has an ability to sacrificially prevent corrosion. For example, JIS-1000 pure aluminum or a JIS-7000 Al-Zn alloy can be used. As the intermediate material, various aluminum alloys can be used depending on required properties.

The alloy numbers shown in this description are based on JIS H 4000:2014 and JIS Z 3263:2002.

Next, a brazing method for an aluminum alloy brazing sheet in the present embodiment is described.

### [Brazing method for aluminum alloy brazing sheet]

The brazing method for the aluminum alloy brazing sheet in the present embodiment is the so-called flux-less brazing, in which no flux is used. In this method, the brazing sheet is heated in an inert gas atmosphere under given thermal conditions.

### (Heating conditions: temperature-rising rate)

In the case where the rate of temperature rising from 350°C to 560°C when the brazing sheet in the present embodiment is heated (brazed) is less than 1°C/min, it becomes likely to occur that Mg in the brazing filler material diffuses excessively to a surface-layer portion of the brazing filler material during this temperature rising to yield MgO in the surface of the brazing filler material, and this may result in a decrease in brazing property. Meanwhile, in the case where the rate of temperature rising from 350°C to 560°C exceeds 500°C/min, it becomes likely to occur that Mg in the core material and brazing filler material does not properly diffuse to a surface-layer portion of the brazing filler material and be hence insufficient in getter function, and this may result in a decrease in brazing property.

Consequently, the rate of temperature rising from 350°C to 560°C is preferably 1°C/min or more and 500°C/min or less.

From the standpoint of further reducing the possibility of MgO being yielded in the surface of the brazing filler material, the rate of temperature rising from 350°C to 560°C is preferably 10°C/min or more. From the standpoint of more reliably performing the getter function, the rate of temperature rising from 350°C to 560°C is preferably 300°C/min or less.

Meanwhile, the rate of temperature rising from 560°C is not particularly limited, and may be, for example, 5°C/min or more and 1,000°C/min or less.

Although the rate of temperature rising from 560°C to an actual heating temperature (a given maximum temperature within the heating-temperature range which will be described later) is not particularly limited, the rate may be in the same range as the rate of temperature rising from 350°C to 560°C. Meanwhile, the rate of temperature declining from the actual heating temperature to 560°C is also not particularly limited, and may be in the same range as the rate of temperature declining from 560°C.

### (Heating conditions: heating temperature, holding period)

The heating temperature (brazing-filler melting temperature) in heating the brazing sheet in the present embodiment is 560°C or more and 620°C or less, at which the brazing filler material melts properly, and is preferably 580°C or more and 620°C or less. In the case where the period of holding the brazing sheet at a temperature within that range is less than 10 seconds, the time required for causing the brazing phenomena (destruction of an oxide film, decrease in the oxygen concentration of the atmosphere, and flow of the molten brazing filler to portions to be joined) to occur might not be enough.

Consequently, the holding period in heating at a temperature in the range of from 560°C to 620°C (preferably at a temperature in the range of from 580°C to 620°C) is preferably 10 seconds or more.

From the standpoint of causing the brazing phenomena to occur more reliably, the holding period in heating at a temperature in the range of from 560°C to 620°C (preferably at a temperature in the range of from 580°C to 620°C) is preferably 30 seconds or more, more preferably 60 seconds or more. Meanwhile, there is no particular upper limit on the holding period, but the holding period may be 1,500 seconds or less.

### (Inert gas atmosphere)

The atmosphere in which the brazing sheet in the present embodiment is heated (brazed) is an inert gas atmosphere. For example, the atmosphere is a nitrogen gas atmosphere, an argon gas atmosphere, a helium gas atmosphere, or a mixed-gas atmosphere obtained by mixing two or more of these gases. The inert gas atmosphere preferably is an atmosphere having an oxygen concentration which is as low as possible. Specifically, the oxygen concentration is preferably 50 ppm or less, more preferably 10 ppm or less.

The brazing method for the aluminum alloy brazing sheet in the present embodiment can be carried out at ordinary pressure (atmospheric pressure), without the need of making the atmosphere vacuum.

Usually, members to be joined are assembled (assembly step) so as to come into contact with the brazing filler material of the brazing sheet in this embodiment, before the brazing sheet is subjected to the heating (brazing step). Before the assembly step, the brazing sheet having a desired shape or structure may be formed (forming step).

The brazing method for the brazing sheet in this embodiment (in other words, a method for producing a structure in which a member to be joined is brazed to the brazing sheet) is as described above. Conditions which were not shown above may be the same as common ones. It is a matter of course that the conditions can be modified so long as the effects of the treatment can be obtained.

Next, a method for producing an aluminum alloy brazing sheet in this embodiment is described.

### [Method for producing Aluminum Alloy Brazing Sheet]

A method for producing the brazing sheet in this embodiment is not particularly limited. For example, the brazing sheet is produced by a common production method for clad metals. An example thereof is described below.

First, aluminum alloys respectively having the compositions of the core material and brazing filler material are melted and cast and are then subjected, depending on need, to scalping (surface smoothing treatment of slab) and a homogenizing treatment, thereby obtaining respective slabs. The slab for the brazing filler material is hot-rolled to a given thickness, and is then combined with the slab for the core material and hot-rolled by an ordinary method to obtain a clad metal. Thereafter, this clad metal is cold-rolled and subjected, depending on need, to process annealing and final cold-rolling, and is subjected, depending on need, to final annealing.

The homogenizing treatment is conducted preferably at 400°C or more and 600°C or less for from 1 to 20 hours, and the process annealing is conducted preferably at 300°C or more and 450°C or less for from 1 to 20 hours. The final annealing is conducted preferably at 150°C or more and 450°C or less for from 1 to 20 hours. In the case of conducting the final annealing, the process annealing can be omitted. Thermal refining of any of H1n, H2n, H3n, and O (JIS H 0001:1998) may be performed.

A method for producing the aluminum alloy brazing sheet in this embodiment is as described above. Conditions for each step which were not shown above may be the same as common ones. It is a matter of course that the conditions can be suitably modified so long as the effects of the processing in each step can be produced.

### EXAMPLES

Next, the aluminum alloy brazing sheet in the present invention is described in detail by comparing Examples which satisfy the requirements in the present invention, and Comparative Examples which do not satisfy the requirements in the present invention.

### [Production of Specimens]

Core materials respectively having the compositions shown in Table 1 were produced by casting, followed by subjecting the core materials to a homogenizing treatment of 600°C × 5 hr and to both-surface scalping to a given thickness. Meanwhile, brazing filler materials respectively having the compositions shown in Table 1 were produced by casting, followed by subjecting the brazing filler materials to a homogenizing treatment of 500°C × 5 hr and then hot-rolled to a given thickness to produce hot-rolled sheets. The brazing filler materials were combined on both surfaces of the core material (brazing filler material-core material-brazing filler material) and hot-rolled is performed to obtain a clad metal. Thereafter, the clad metal was cold-rolled, then finish-rolled and subjected to finish annealing of 400°C × 5 hr to produce a brazing sheet having a three-layer structure (O-tempered material) as a specimen.

Table 1 shows the plate thickness and the brazing filler material thickness (thickness of the brazing filler material on one side) of each specimen.

Shown below are conditions for brazing-corresponding heating, methods for evaluating brazing properties (gap-filling properties) and flowability of molten brazing filler, and criterial for the evaluation.

### [Brazing-corresponding Heating]

Brazing-corresponding heating was conducted in a nitrogen atmosphere with an oxygen concentration of 5 ppm under the conditions of a rate of temperature rising from 400°C to 560°C of 50°C/min and a period of holding at temperatures of 575°C or higher of 180 seconds.

The rate of temperature rising from 560°C to a maximum temperature was 15°C/min, and the declining rate of temperature was 100°C/min.

### [Evaluation of Brazing Properties (Evaluation of gap-filling properties)]

Brazing properties were evaluated with reference to the evaluation method described in "Aluminum Brazing Handbook (revised edition)" (Japan Light Metal Welding Association, published in March, 2003), author: TAKEMOTO Tadashi, et al., pp. 132-136.

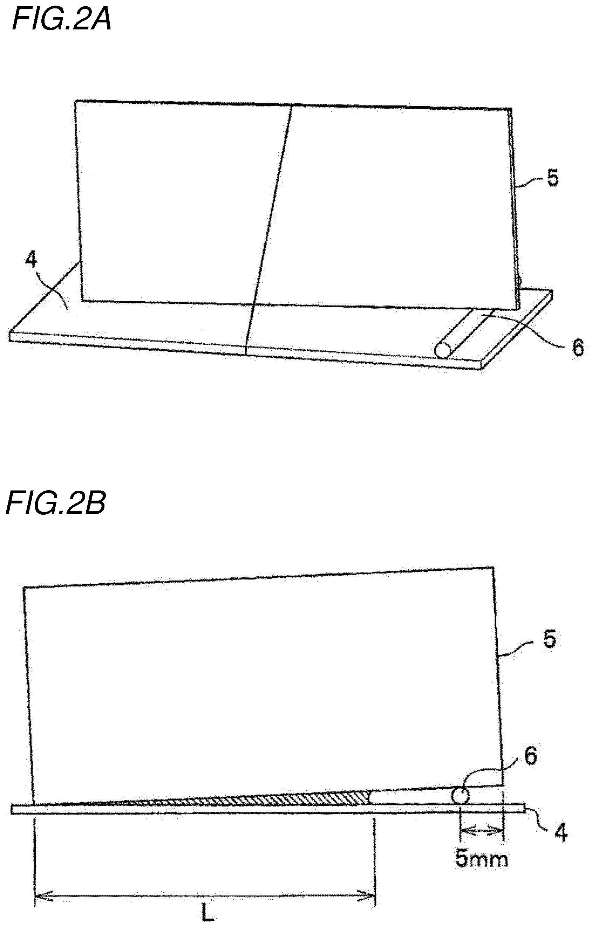

Specifically, a test piece having areal dimensions of 25 mm × 60 mm was cut out of a specimen which had not undergone the brazing-corresponding heating. As shown in FIG. 2A and FIG. 2B, an upper sheet 5 (3003 Al alloy sheet-O material (1.0 mm (thickness) × 15 mm (width) × 55 mm (length)) was disposed to be perpendicular to a horizontally placed lower sheet 4 (test piece, 25 mm (width) × 60 mm (length)), with a stainless-steel spacer 6 having a diameter of 2 mm interposed therebetween so that a given clearance was formed.

The two sheets were bonded to each other by brazing under the conditions for brazing-corresponding heating described above. After the bonding by brazing, the length (L) over which the gap between the lower sheet 4 and the upper sheet 5 had been filled (filled-gap length L) was measured to convert the brazing properties into a numeral.

The evaluated brazing properties, strictly speaking, are gap-filling properties, and brazing properties in which the gap between the joining surfaces of the members which is formed when each member is assembled or the gap between the joining surfaces of the members which is formed by thermal deformation of the brazing sheet or the member at brazing are considered.

In the evaluation of brazing properties (evaluation of gap-filling properties), the specimens which gave a filled-gap length L of 15.0 mm or more were rated as "A", those which gave a filled-gap length L of 10.0 mm or more and less than 15.0 mm were rated as "B", those which gave a filled-gap length L of less than 10.0 mm were rated as "C". In the evaluation, "A", and "B" are acceptable, and "C" is unacceptable.

### [Evaluation of flowability of molten brazing filler]

A test piece having areal dimensions of 15 mm × 55 mm was cut out of a specimen which had not undergone the brazing-corresponding heating. As shown in FIG. 3A, a vertical sheet 8 (test piece (15 mm (width) × 55 mm (length)) was disposed at the upper side of a horizontally placed horizontal sheet 7 (3003 Al alloy sheet-O material (1.0 mm (thickness) × 25 mm (width) × 60 mm (length)) so that the vertical sheet 8 was perpendicular to the sheet 7. As shown in FIG. 3B, a vertical sheet 10 (test piece (15 mm (width) × 55 mm (length)) was perpendicularly disposed at the lower side of a horizontally placed horizontal sheet 9 (3003 Al alloy sheet-O material (1.0 mm (thickness) × 25 mm (width) × 60 mm (length)) so that the vertical sheet 10 was perpendicular to the sheet 9.

The two sheets were bonded to each other by brazing under the conditions for brazing-corresponding heating described above. After the bonding by brazing, the cross-sectional area of a fillet F1 shown in FIG. 4A, which is the cross section of FIG. 3A, and the cross-sectional area of a fillet F2 shown in FIG. 4B, which is the cross section of FIG. 3B, were measured. "Total cross-sectional area (µm²) of two fillets F2 on both sides of vertical sheet/ total cross-sectional area (µm²) of two fillets F1 on both sides of vertical sheet" was calculated.

In the evaluation of the flowability of the molten brazing filler, the specimens which had the calculated value (indicated as "top-bottom difference" in the table and the figure) of 0.50 or more were rated as "A", those which had the calculated value of 0.45 or more and less than 0.50 were rated as "B", and those which had the calculated value of less than 0.45 were rated as "B". In the evaluation, "A", and "B" are acceptable, and "C" is unacceptable.

Table 1 below shows the composition of the brazing filler material, the composition of the core material, the thickness of the sheet material, the thickness of the brazing filler material, and the evaluation results thereof. The remainder of the brazing filler material and the core material in Table 1 is Al and unavoidable impurities. Symbol "-" in Table 1 indicates that the element was not contained (the content was a detection limit or less).

**[Table 1]**

| Specimen No. | Plate thickness (mm) | Brazing filler material thickness (µm) | Brazing filler material (mass%)^{∗} | | | | | | 0.55 × [Mn] + 0.31 × [Ti] | Core material (mass%)^{∗} | | | | Evaluation of brazing properties | | Evaluation of flowability of molten brazing filler | |
|---|---|---|---|---|---|---|---|---|---|---|---|---|---|---|---|---|---|
| | | | Si | Mg | Bi | Mn | Ti | Zn | | Mn | Mg | Cu | Si | Filled-gap length (mm) | Evaluation | Top-bottom difference (-) | Evaluation |
| 1 | 0.8 | 80 | 6.5 | 0.35 | 0.30 | 0.30 | - | 3.0 | 0.165 | 1.1 | 0.45 | 0.80 | 0.1 | 18.8 | A | 0.62 | A |
| 2 | 1.0 | 80 | 6.2 | 0.35 | 0.30 | 0.30 | - | 4.0 | 0.165 | 1.1 | 0.45 | 0.80 | 0.1 | 14.7 | B | 0.53 | A |
| 3 | 1.2 | 144 | 7.0 | 0.30 | 0.25 | 0.30 | - | 1.0 | 0.165 | 1.1 | 0.45 | 0.80 | 0.1 | 17.7 | A | 0.50 | A |
| 4 | 1.2 | 144 | 7.0 | 0.45 | 0.25 | 0.30 | - | 1.0 | 0.165 | 1.1 | 0.45 | 0.80 | 0.1 | 20.3 | A | 0.45 | B |
| 5 | 1.2 | 144 | 7.0 | 0.60 | 0.25 | 0.30 | - | 1.0 | 0.165 | 1.1 | 0.45 | 0.80 | 0.1 | 17.7 | A | 0.45 | B |
| 6 | 1.2 | 144 | 7.0 | 0.80 | 0.25 | 0.30 | - | 1.0 | 0.165 | 1.1 | 0.45 | 0.80 | 0.1 | 17.8 | A | 0.55 | A |
| 7 | 1.2 | 144 | 7.0 | 0.45 | 0.25 | 0.30 | - | 1.0 | 0165 | 1.1 | 0.60 | 0.80 | 0.1 | 18.2 | A | 0.46 | B |
| 8 | 1.2 | 144 | 7.0 | 0.60 | 0.25 | 0.30 | - | 1.0 | 0.165 | 1.1 | 0.60 | 0.80 | 0.1 | 15.5 | A | 0.55 | A |
| 9 | 1.2 | 120 | 7.0 | 0.35 | 0.25 | 0.30 | - | 1.0 | 0.165 | 1.1 | 0.45 | 0.80 | 0.1 | 12.8 | B | 0.56 | A |
| 10 | 1.2 | 60 | 7.0 | 0.35 | 0.25 | 0.30 | - | 1.0 | 0.165 | 1.1 | 0.45 | 0.80 | 0.1 | 12.3 | B | 0.49 | B |
| 11 | 1.2 | 120 | 7.0 | 0.35 | 0.25 | 0.60 | - | 1.0 | 0.330 | 1.1 | 0.45 | 0.80 | 0.1 | 17.2 | A | 0.74 | A |
| 12 | 1.2 | 120 | 7.0 | 0.35 | 0.25 | 0.15 | - | 1.0 | 0.083 | 1.1 | 0.45 | 0.80 | 0.1 | 15.4 | A | 0.48 | B |
| 13 | 1.2 | 120 | 7.0 | 0.35 | 0.25 | - | 0.30 | 1.0 | 0.090 | 1.1 | 0.45 | 0.80 | 0.1 | 15.9 | A | 0.47 | B |
| 14 | 1.2 | 120 | 7.0 | 0.35 | 0.25 | - | 0.50 | 1.0 | 0.150 | 1.1 | 0.45 | 0.80 | 0.1 | 16.4 | A | 0.55 | A |
| 15 | 1.2 | 120 | 7.0 | 0.35 | 0.25 | 0.30 | 0.10 | 1.0 | 0.195 | 1.1 | 0.45 | 0.80 | 0.1 | 18.2 | A | 0.67 | A |
| 16 | 1.2 | 120 | 7.0 | 0.35 | 0.25 | 0.30 | - | - | 0.165 | 1.1 | 0.45 | 0.80 | 0.1 | 16.8 | A | 0.54 | A |
| 17 | 1.2 | 120 | 7.0 | 0.35 | 0.25 | 0.30 | - | 0.4 | 0.165 | 1.1 | 0.45 | 0.80 | 0.1 | 15.1 | A | 0.48 | B |
| 18 | 1.2 | 120 | 8.0 | 0.35 | 0.25 | 0.30 | - | 1.0 | 0.165 | 1.1 | 0.45 | 0.80 | 0.1 | 15.3 | A | 0.47 | B |
| 19 | 1.2 | 120 | 7.0 | 0.35 | 0.25 | 0.30 | - | 1.0 | 0.165 | 1.1 | 0.45 | 0.80 | 0.1 | 17.3 | A | 0.62 | A |
| 20 | 1.2 | 120 | 6.0 | 0.35 | 0.25 | 1.00 | - | 1.0 | 0.550 | 1.1 | 0.45 | 0.80 | 0.1 | 9.8 | C | 0.46 | B |
| 21 | 1.2 | 120 | 7.0 | 0.35 | 0.25 | 1.00 | - | 1.0 | 0.550 | 1.1 | 0.45 | 0.80 | 0.1 | 12.8 | B | 0.31 | C |
| 22 | 1.2 | 120 | 10.0 | 0.35 | 0.25 | 1.00 | - | 1.0 | 0.550 | 1.1 | 0.45 | 0.80 | 0.1 | 17.8 | A | 0.33 | C |
| 23 | 1.2 | 120 | 11.5 | 0.35 | 0.25 | 1.00 | - | 1.0 | 0.550 | 1.1 | 0.45 | 0.80 | 0.1 | 14.0 | B | 0.15 | C |
| 24 | 1.2 | 120 | 7.0 | 0.35 | 0.25 | - | - | 1.0 | 0.000 | 1.1 | 0.45 | 0.80 | 0.1 | 12.0 | B | 0.42 | C |
| 25 | 1.2 | 120 | 7.0 | 0.35 | 0.25 | - | 0.10 | 1.0 | 0.030 | 1.1 | 0.45 | 0.80 | 0.1 | 15.8 | A | 0.37 | C |
| 26 | 1.2 | 120 | 7.0 | 0.35 | - | 0.30 | - | 1.0 | 0.165 | 1.1 | 0.45 | 0.80 | 0.1 | 9.2 | C | 0.39 | C |

| | | | | | | | | | | | | | | | | | |
|---|---|---|---|---|---|---|---|---|---|---|---|---|---|---|---|---|---|
| ^{∗}Remainder: Al and unavoidable impurities | | | | | | | | | | | | | | | | | |

### [Examination of the Results]

Specimens 1 to 19 satisfied the requirements specified in the present invention. Specimens 1 to 19 hence gave results in which the "gap-filling properties" were acceptable and the "flowability of the molten brazing filler" was acceptable.

Meanwhile, specimens 20 to 26 did not satisfy the requirements specified in the present invention and hence gave results in which at least one of the gap-filling properties and the flowability of the molten brazing filler was unacceptable. Specifically, the results are as follows.

In the specimen 20, since the content of Mn in the brazing filler material exceeded the given value, the gap-filling properties were unacceptable. In the specimen 20, since the content of Mn of the brazing filler material exceeded the given value, the compounds having a large specific gravity were formed, and the molten brazing filler is easily allowed to flow, and as a result, the flowability of the molten brazing filler was expected to be unacceptable. However, due to the fact that the content of Si in the brazing filler material was relatively small, the molten brazing filler was slightly difficult to flow, and therefore the flowability of the molten brazing filler was barely acceptable.

In the specimen 21, the content of Mn in the brazing filler material exceeded the given value, and therefore the flowability of the molten brazing filler was unacceptable.

In the specimens 22 and 23, the content of Si in the brazing filler material exceeded the given value, and the content of Mn of the brazing filler material exceeded the given value, and therefore the flowability of the molten brazing filler was unacceptable.

In the specimen 24, neither Mn nor Ti was contained in the brazing filler material, and the value calculated by 0.55 × [Mn] + 0.31 × [Ti] was less than the given value, and therefore the flowability of the molten brazing filler was unacceptable.

In the specimen 25, Ti is contained in the brazing filler material, but the value calculated by 0.55 × [Mn] + 0.31 × [Ti] was less than the given value, and therefore the flowability of the molten brazing filler was unacceptable.

In the specimen 26, the content of Bi was less than the given value, and therefore the gap-filling properties and the flowability of the molten brazing filler were unacceptable.

From the above results, it was confirmed that the aluminum alloy brazing sheet according to the present invention is excellent in flow-inhibiting of the molten brazing filler (flowability of molten brazing filler) and gap-filling properties.

Although various embodiments have been described above with reference to the drawings, it is needless to say that the present invention is not limited to these examples. It will be apparent to those skilled in the art that various changes and modifications may be conceived within the scope of the claims. It is also understood that the various changes and modifications belong to the technical scope of the present invention. Components in the embodiments described above may be combined freely within a range not departing from the spirit of the present invention.

The present application is based on Japanese patent application No. 2020-064320 filed on March 31, 2020, contents of which are incorporated herein by reference.

### REFERENCE SIGNS LIST

1 Aluminum alloy brazing sheet (brazing sheet)
2 Core material
3 Brazing filler material

## Claims

1. An aluminum alloy brazing sheet comprising a core material and a brazing filler material provided on at least one surface of the core material, wherein
the brazing filler material contains
Si: 5.0 mass% or more and 9.0 mass% or less,
Mg: 0.10 mass% or more and 0.90 mass% or less, and
Bi: 0.05 mass% or more and 0.60 mass% or less, and
further contains at least one of
Mn: 0.80 mass% or less and
Ti: 0.60 mass% or less,
with the remainder being Al and unavoidable impurities, and
0.55 × [Mn] + 0.31 × [Ti] ≥ 0.055 is satisfied, wherein
[Mn] is the Mn content in mass% and [Ti] is the Ti content in mass%.

2. The aluminum alloy brazing sheet according to claim 1, wherein the brazing filler material further contains Zr: 5.0 mass% or less.

3. The aluminum alloy brazing sheet according to claim 1 or 2, wherein the brazing filler material further contains one or more of
Fe: 0.35 mass% or less,
Cr: 0.3 mass% or less,
Zr: 0.3 mass% or less, and
V: 0.3 mass% or less.

4. The aluminum alloy brazing sheet according to claim 1 or 2, wherein the brazing filler material has a thickness of 20 µm or more.

5. The aluminum alloy brazing sheet according to claim 3, wherein the brazing filler material has a thickness of 20 µm or more.

6. The aluminum alloy brazing sheet according to claim 1 or 2, wherein the core material is made of an Al-Mn alloy containing Mg: 1.00 mass% or less.

7. The aluminum alloy brazing sheet according to claim 3, wherein the core material is made of an Al-Mn alloy containing Mg: 1.00 mass% or less.

8. A brazing method using an aluminum alloy brazing sheet including a core material and a brazing filler material provided on at least one surface of the core material, wherein
the brazing filler material contains
Si: 5.0 mass% or more and 9.0 mass% or less,
Mg: 0.10 mass% or more and 0.90 mass% or less, and
Bi: 0.05 mass% or more and 0.60 mass% or less, and
further contains at least one of
Mn: 0.80 mass% or less and
Ti: 0.60 mass% or less,
with the remainder being Al and unavoidable impurities, and
0.55 × [Mn] + 0.31 × [Ti] ≥ 0.055 is satisfied, wherein
[Mn] is the Mn content in mass% and [Ti] is the Ti content in mass%, and wherein
the brazing method comprises brazing the aluminum alloy brazing sheet at a heating temperature of 560°C or more and 620°C or less without a flux.
